# EUROPEAN PATENT SPECIFICATION

(11) **EP 1 221 462 B1**
(45) Date of publication and mention of the grant of the patent: **26.09.2007**
(21) Application number: 01300147.4
(22) Date of filing: 09.01.2001
(51) Int. Cl.: C08L 23/10, C08L 53/00, C08L 51/06, C08L 25/10, C08K 3/22, C08F 8/46, H01B 3/44

(54) **Olefin-based resin composition, method of making it and electrical wire covered with it**
Zusammensetzung auf der Basis von Olefinharzen, Verfahren zu deren Herstellung und mit derselben umhüllter elektrischer Draht
Composition d'une résine à base oléfinique, procédé de production de la dite résine et fil électrique revêtu avec la même

(43) Date of publication of application: 10.07.2002
(73) Proprietor: Sumitomo Wiring Systems, Ltd., Yokkaichi-City, Mie, 510-8503 (JP); Sumitomo Electric Industries, Ltd., Osaka (JP)
(72) Inventor: Sato, Masashi, Sumitomo Wiring Systems, Ltd., Yokkaichi-city, Mie 510-8503 (JP); Hase, Tatsuya, Sumitomo Wiring Systems, Ltd., Yokkaichi-city, Mie 510-8503 (JP); Fujimoto, Hiroshi, Sumitomo Wiring Systems, Ltd., Yokkaichi-city, Mie 510-8503 (JP)
(74) Representative: Paget, Hugh Charles Edward

(56) References cited:
- EP-A- 0 273 516
- US-A- 5 561 185

## Description

### FIELD OF THE INVENTION

This invention relates to a halogen-free resin composition containing metal hydroxide, to a method of making the resin composition and to electrical wire having this resin composition as a covering on an electrical conductor core. Such an electrical wire is useful for example in a motor vehicle.

### DESCRIPTION OF THE PRIOR ART

Polyvinyl chloride has been much used as the covering material of electrical wire for an automobile, because it is superior in properties such as mechanical strength, extrusion processability, flexibility and colouring property. However, with recent concern for the global environment, halogen-free resin material has come to be used for the production of automobile parts including the covering of electrical wires in an automobile in place of polyvinyl chloride, because polyvinyl chloride discharges a harmful halogen gas on combustion.

A halogen-free resin composition in which a metal hydroxide is blended with a polyolefin-base polymer as a flame-retardant is known as a wear resistant resin composition having the merit of no generation of a poisonous gas such as a halogen gas on combustion (see JP-A-7-176219, JP-A-7-78518 and the like). In order that such a flame-retarding resin composition has a self-extinction property, a large quantity of a metal hydroxide is required to be added, but this causes problems that mechanical strength such as the wear resistance, tensile strength and the like of the composition are much reduced. In order to prevent the deterioration of mechanical strength, it may be considered that amounts of a polypropylene having a comparatively high hardness and a high density polyethylene are increased, but the flexibility of the covered electrical wire is reduced thereby and the processability becomes poor.

Various specific prior art proposals in this field will now be mentioned.

JP-A-6-290638 discloses resin compositions containing metal hydroxide for electrical wire insulation, in which the resin composition is based on polypropylene (>80%). Additional components are polyethylene modified with acid anhydride and styrene copolymer.

US-A-5561185 describes resin composition for electrical wires containing metal hydroxide, in which the resin components are (a) 40 - 88.5% by weight of propylene which is 50% by weight or more of a ethylene/propylene random copolymer, (b) 1.5 to 30% by weight of a polyethylene modified with carboxylic acid derivative, e.g. maleic anhydride and (c) 10 to 48% by weight of an ethylene-series copolymer, typically ethylene/vinyl acetate copolymer.

US-A-5180889 also describes a resin composition containing metal hydroxide as a covering of conductors in a crush resistant cable assembly. The resin components are (a) a low density copolymer of ethylene and alphaolefin, (b) an elastomeric styrene-ethylene-butylene-styrene tri-block copolymer, preferably modified with maleic anhydride and (c) optionally an impact propylene and copolymer or polypropylene. Component (a) in the examples is 50% by weight or more of the total resin components.

EP-A-273516 proposes flame retardant insulation compositions comprising a functionalized selectively hydrogenated monoalkenyl arene-conjugated diene block copolymer (e.g. styrene-ethylene/butylene-styrene block copolymer modified with maleic anhydride), polypropylene, plasticizer and hydrated inorganic filler (e.g. aluminium hydroxide). In the examples one polypropylene component is present. It is suggested that maleic anhydride functionalized polypropylene may be used.

### SUMMARY OF THE INVENTION

The object of the present invention is to provide a halogen-free olefin-based resin composition comprising a mixture of selected components providing a good balance of properties, for example wear resistance, flame resistance, tensile property, flexibility and the like which are required for the covering material of an electrical wire, e.g. for an automobile.

The present invention provides an olefin-based resin composition containing the following resin components:-
(a) 39 - 94 parts by weight of a propylene polymer having a melt flow rate (MFR) of 0.1 - 5 g/10 min. measured in accordance with JIS K6921-2 and selected from propylene homopolymers and propylene-ethylene copolymers having a propylene content of at least 50% by weight,
(b) 1 - 20 parts by weight of a polypropylene modified with 0.1 - 10% by weight of an acid anhydride,
(c) 5 - 60 parts by weight of a styrene-based polymeric elastomer modified with 0.1 - 10% by weight of an acid anhydride,
   wherein the total of the components (a), (b) and (c) is 100 parts by weight and no other resin component is present in the composition, and further containing
(d) 30 - 200 parts by weight of a metal hydroxide.

The invention also consists in an electrical wire having this composition as a covering on a conductor.

The respective components of the composition of the present invention are selected to provide in combination the desired properties and are illustrated as follows.

The propylene polymer (a) having an MFR of 0.1 - 5 is a propylene homopolymer or a propylene-ethylene copolymer of block or random type whose main monomer component (more than 50% by weight) is propylene. Examples of such a propylene polymer having an MFR of 0.1 - 5 g/10 min. are RB610A, RB410, RB110 and the like which are commercially available from TOKUYAMA Co., Ltd. When the proportion of the propylene polymer (a) in the total of components (a), (b) and (c) exceeds 94 parts by weight, the flexibility of the composition is damaged and processing becomes difficult. On the other hand, when the proportion of the propylene polymer (a) is less than 39 parts by weight, the wear resistance of the composition is low.

MFR is measured in accordance with JIS K6921-2. The unit of MFR is g/10min. MFR is indicative of molecular length. The selection of a value of 0.1 - 5 g/10 min. achieves good cold weather performance, in particular avoidance of cracking.

Component (b) is a polypropylene modified with 0.1 - 10% by weight of a carboxylic acid anhydride, typically unsaturated acid anhydride e.g. maleic anhydride. The polypropylene (b) preferably has a Shore D hardness of 50 or more.

The amount of component (b) in the total of 100 parts by weight of the polymers (a), (b) and (c) is 1 - 20 parts by weight, and preferably 5 - 20 parts by weight. When this proportion exceeds 20 parts by weight, flexibility is reduced and processability becomes poor. On the other hand, when the proportion of component (b) is less than one part by weight, the wear resistance is poor.

The polypropylene component (b) gives the composition heat resistance, both during extrusion and if over-heating occurs in use, e.g. in an automobile.

The styrene-based polymeric elastomer, component (c), is a styrene-based elastomer modified with 0.1 - 10% by weight of a carboxylic acid anhydride, typically unsaturated acid anhydride, for example, maleic acid anhydride. The styrene-based elastomer is preferably a polymer obtained by block-copolymerising styrene with butadiene, and saturating double bonds of the resulting block-copolymer by hydrogenation (known as SEBS). Typically the ratio of the styrene/butadiene is in the range 3/7 to 2/8 by weight. Alternatively there is used for example a styrene-based elastomer obtained by block polymerising styrene and isoprene and hydrogenating the double bonds of the block copolymer (this product can be regarded as polystyrene-poly(ethylene-propylene)-polystyrene, and is known as SEPS).

The amount of component (c), in the total amount of 100 parts by weight of the polymers (a), (b) and (c) in the composition is 5 - 60 parts by weight, and preferably 5 - 50 parts by weight. When this proportion of component (c) exceeds 60 parts by weight, wear resistance is poor. On the other hand, when the proportion of component (c) is less than 5 parts by weight, flexibility is reduced and processability becomes poor.

Magnesium hydroxide, aluminum hydroxide and the like can be exemplified as the metal hydroxide, component (d). It is preferable that the metal hydroxide particles are surface-treated with a coupling agent, particularly a silane coupling agent (for example, an aminosilane coupling agent, a vinylsilane coupling agent, an epoxysilane coupling agent, etc.) and optionally a surface-treating agent such as a higher aliphatic acid (for example, stearic acid, oleic acid, etc.) or the like. The silane coupling agent typically contains Si-O linkages which bond to the hydroxide. Magnesium hydroxide surface-treated with an aminosilane coupling agent is preferable in particular.

The amount of the metal hydroxide based on the total amount (100 parts by weight) of the polymers (a), (b) and (c) in the composition is in the range 30 - 200 parts by weight, preferably 50 - 150 parts by weight and more preferably 70 - 100 parts by weight. When the amount of the metal hydroxide is too large, the elongation of the composition is reduced and the wear resistance, the flexibility and the processability are poor. On the other hand, when the amount of the metal hydroxide is too small, the flame resistance of the composition is reduced.

All of the components (a), (b) and (c) are selected to be halogen-free. Synthetic resin components other than components (a), (b) and (c) are substantially absent. Components (a) and (b) are different.

Compounding agents usually included in an olefin-based resin composition, such as for example an oxidation inhibitor, a copper inhibitor, a lubricant and the like may be present in the olefin-based resin composition of the present invention provided that their amount does not excessively deteriorate the above-mentioned properties.

The olefin-based resin composition of the present invention can be prepared by mixing and kneading the respective components according to conventional methods.

Covering an electrical wire core, particularly to make an electrical wire for an automobile, by the resin composition of the present invention may be performed by a conventional method.

The olefin-based resin composition of the present invention when used as the covering material of an electrical wire, e.g. for an automobile, can provide excellent properties such as wear resistance, flame resistance, tensile properties, flexibility and the like, as are required.

In particular, when metal hydroxide particles surface-treated with an aminosilane coupling agent are used, the coupling agent bonds the metal hydroxide with the acid anhydride. The coupling agent has a functional group reacting with the inorganic hydroxide and a functional group reacting with the organic anhydride. Also the epoxysilane and vinylsilane coupling agents have affinity to the hydroxide and the anhydride. Accordingly, the mechanical strength, particularly the wear resistance, can be remarkably improved without damaging the flexibility of the resin composition. Further, when an amino group exists on the lipophilic side of the silane coupling agent molecule, the reaction with the polyolefin and the styrene-based elastomer modified with an acid anhydride advantageously suppresses the hydrophilic property of the amino group.

### EXAMPLES

The present invention is more specifically illustrated by the following Examples and Comparative Examples.

### Examples 1 - 3 and Comparative Examples 1 - 6

The components shown in Tables 1 and 2 are mixed at the amounts shown (parts by weight), and kneaded at 250°C by a twin-screw extruder. Each composition obtained was extrusion-molded at a covering thickness of 0.3mm around a conductor of 0.5mm² cross-section (twisted wire consisting of 7 soft copper wires each of diameter 0.32mm). A die having a diameter of 1.6mm and a nipple having a diameter of 1.0mm were used for extrusion molding. The extrusion temperature was 240 - 260°C for die and 230 - 250°C for cylinders, and the extrusion molding was carried out at a linear velocity of 100m/min.

The meanings of abbreviations in the Tables are as follows:-
Propylene BP: a propylene-ethylene block copolymer having a propylene content of more than 50% by weight and MFR of 0.5 (RB610A manufactured by Tokuyama Co., Ltd.).
MAH-PP: a polypropylene modified with 1% by weight of maleic anhydride (ER320P manufactured by Japan Polyolefin Co., Ltd.) having a Shore D hardness of 76.
SEBS: a styrene-based elastomer obtained by saturating double bonds of a block copolymer of styrene and butadiene by hydrogenation (TUFTECH H1041 manufactured by Asahi Chemical Co., Ltd.).
MAH-SEBS: a styrene-based elastomer obtained by saturating the double bonds of a block copolymer of styrene and butadiene by hydrogenation, modified with 1% by weight of maleic anhydride (TUFTECH M1913 manufactured by Asahi Chemical Co., Ltd.).
MAGNIFIN H5IV: a magnesium hydroxide surface-treated with an aminosilane coupling agent (manufactured by alusuisse-martinswerk gmbh).

As an antioxidant, a hindered phenol-based antioxidant (trade mark "TOMINOX TT" manufactured by Yoshitomi Fine Chemicals Ltd.) was used.

The flame resistance, tensile strength, elongation and wear resistance in Examples 1 and 2 and Comparative Examples 1 - 6 were measured in accordance with JASO (Japan Automobile Standards Organisation) D 611. The wear resistance is an average of 3 samples, and a value 300 cycles or more is deemed acceptable.

The flexibility was evaluated by touch when the electrical wire was folded.

The processability was evaluated by the presence of whisker formation at peeling at the terminal of the electrical wire.

The results are shown in Tables 1 and 2.

**TABLE 1**

| | Example 1 | Example 2 |
|---|---|---|
| Propylene BP | 60 | 50 |
| MAH-PP | 10 | 10 |
| MAH-SEBS | 30 | 40 |
| SEBS | - | - |
| MAGNIFIN H51V | 90 | 90 |
| Antioxidant | 1 | 1 |
| Total | 191 | 191 |
| Flame resistance | good | good |
| Tensile strength (MPa) | 41.5 | 39.0 |
| Tensile elongation (%) | 503 | 610 |
| Wear resistance (cycle) | 1480 | 638 |
| Flexibility | good | good |
| Processability | good | good |

**TABLE 2**

| | Comparative Example 1 | Comparative Example 2 | Comparative Example 3 | Comparative Example 4 | Comparative Example 5 |
|---|---|---|---|---|---|
| Propylene BP | 50 | 90 | 40 | 50 | 30 |
| MAH-PP | - | 10 | 30 | - | 10 |
| MAH-SEBS | - | - | - | 50 | 60 |
| SEBS | 50 | - | 30 | - | - |
| MAGNIFIN H51V | 90 | 120 | 90 | 90 | 90 |
| Antioxidant | 1 | 1 | 1 | 1 | 1 |
| Total | 191 | 221 | 191 | 191 | 191 |
| Flame resistance | good | good | good | good | good |
| Tensile strength (MPa) | 34.1 | 22.1 | 33.9 | 38.7 | 30.5 |
| Tensile elongation (%) | 680 | 437 | 107 | 650 | 510 |
| Wear resistance (cycle) | 63 | 4726 | 4341 | 120 | 131 |
| Flexibility | good | bad | bad | good | good |
| Processability | good | bad | bad | good | good |

The results of Example 1 and Comparative Example 5 show that, when the amount of the styrene-based elastomer modified with an acid anhydride deviates from the range of the present invention, the wear resistance and flexibility of the resin composition are incompatible.

The results of Example 2 and Comparative Example 3 show that, when the styrene-based elastomer not modified with an acid anhydride is used, the wear resistance of the resin composition is high, but the flexibility is poor.

### Examples 3 - 4 and Comparative Examples 6 - 9

The components shown in Tables 3 and 4 are mixed at the amounts shown, and kneaded at 250°C.

The composition obtained was extrusion-molded at a covering thickness of 0.2mm around a conductor which is the same as in Examples 1 and 2. A die having a diameter of 1.3mm and a nipple of diameter 0.88mm were used for extrusion molding. The extrusion temperature was 240 - 260°C for the die and 230 - 250°C for cylinders, and the extrusion molding was carried out at a linear velocity of 100m/min.

The flame resistance, tensile strength, elongation and wear resistance of Examples 3 and 4 and Comparative Examples 6 - 9 were measured in like manner as in Examples 1 and 2. Results are shown in Tables 3 and 4.

**TABLE 3**

| | Example 3 | Example 4 |
|---|---|---|
| Propylene BP | 80 | 85 |
| MAH-PP | 10 | 10 |
| MAH-SEBS | 10 | 5 |
| SEBS | - | |
| MAGNIFIN H51V | 70 | 70 |
| Antioxidant | 1 | 1 |
| Total | 171 | 171 |
| Flame resistance | good | good |
| Tensile strength (MPa) | 40.3 | 41.3 |
| Tensile elongation (%) | 162 | 630 |
| Wear resistance (cycle) | 922 | 1351 |
| Flexibility | good | good |
| Processability | good | good |

**TABLE 4**

| | Comparative Example 6 | Comparative Example 7 | Comparative Example 8 | Comparative Example 9 |
|---|---|---|---|---|
| Propylene BP | 100 | 90 | 70 | 90 |
| MAH-PP | - | - | - | 10 |
| MAH-SEBS | - | - | - | - |
| SEBS | - | 10 | 30 | - |
| MAGNIFIN H51V | 70 | 70 | 70 | 70 |
| Antioxidant | 1 | 1 | 1 | 1 |
| Total | 171 | 171 | 171 | 171 |
| Flame resistance | good | good | good | good |
| Tensile strength (MPa) | 34.2 | 36.8 | 39.5 | 39.5 |
| Tensile elongation (%) | 683 | 710 | 535 | 535 |
| Wear resistance (cycle) | 2131 | 120 | 40 | 2862 |
| Flexibility | bad | good | good | bad |
| Processability | bad | good | good | bad |

## Claims

1. An olefin-based resin composition containing the following resin components:-
(a) 39 - 94 parts by weight of a propylene polymer having a melt flow rate of 0.1 - 5 g/10 min. measured in accordance with JIS K6921-2 and selected from propylene homopolymers and propylene-ethylene copolymers having a propylene content of at least 50% by weight,
(b) 1 - 20 parts by weight of a polypropylene modified with 0.1 - 10% by weight of an acid anhydride,
(c) 5 - 60 parts by weight of a styrene-based polymeric elastomer modified with 0.1 - 10% by weight of an acid anhydride
wherein the total of the components (a), (b) and (c) is 100 parts by weight and no other resin component is present in the composition,
and further containing
(d) 30 - 200 parts by weight of a metal hydroxide.

2. An olefin-based resin composition according to claim 1, wherein the amount of component (b) is 5 - 20 parts by weight, the amount of component (c) is 5 - 50 parts by weight, and the amount of component (d) is 50 - 150 parts by weight.

3. An olefin-based resin composition according to claim 1 or 2, wherein the acid anhydride in components (b) and (c) is maleic acid anhydride.

4. An olefin-based resin composition according to claim 1, 2 or 3, wherein said metal hydroxide is magnesium hydroxide surface-treated with an aminosilane, vinylsilane or epoxysilane coupling agent.

5. A method of preparing an olefin-based resin composition, comprising thoroughly mixing the following components:-
(a) 39 - 94 parts by weight of a propylene polymer having a melt flow rate of 0.1 to 5 g/10 min. and selected from propylene homopolymers and propylene-ethylene copolymers having a propylene content of at least 50% by weight,
(b) 1 - 20 parts by weight of a polypropylene modified with 0.1 - 10% by weight of an acid anhydride,
(c) 5 - 60 parts by weight of a styrene-based polymeric elastomer modified with 0.1 - 10% by weight of an acid anhydride,
wherein the total of the components (a), (b) and (c) is 100 parts by weight, and
(d) 30 - 200 parts by weight of a metal hydroxide, no other resin component being included in the composition.

6. A method according to claim 5, wherein the amount of component (b) is 5 - 20 parts by weight, the amount of component (c) is 5 - 50 parts by weight, and the amount of component (d) is 50 - 150 parts by weight.

7. A method according to claim 5 or 6, wherein the acid anhydride in components (b) and (c) is maleic acid anhydride.

8. A method according to claim 5, 6 or 7, wherein the metal hydroxide is magnesium hydroxide surface-treated with an aminosilane, vinylsilane or epoxysilane coupling agent.

9. An electrical wire having an electrically conductive core and a covering on said core, said covering being a olefin-based resin composition according to any one of claims 1 to 4.

## Patentansprüche

1. Zusammensetzung auf Olefinharzbasis, enthaltend die folgenden Harzkomponenten:
(a) 39 - 94 Gewichtsteile eines Propylenpolymers mit einer Schmelzflussrate von 0,1 - 5 g / 10 min, gemessen in Übereinstimmung mit JIS K6921-2, und ausgewählt aus Propylenhomopolymeren und Propylen-Ethylen-Copolymeren mit einem Propylengehalt von mindestens 50 Gewichtsprozent,
(b) 1 - 20 Gewichtsteile eines mit 0,1-10 Gewichtsprozent eines Säureanhydrids modifizierten Polypropylens,
(c) 5-60 Gewichtsteile eines mit 0,1 - 10 Gewichtsprozent eines Säureanhydrids modifizierten polymeren Elastomers auf Styrolbasis,
wobei die Gesamtheit der Komponenten (a), (b) und (c) 100 Gewichtsteile beträgt und keine andere Harzkomponente in der Zusammensetzung vorliegt, und weiter enthaltend
(d) 30 - 200 Gewichtsteile eines Metallhydroxids.

2. Zusammensetzung auf Olefinharzbasis nach Anspruch 1, wobei die Menge an Komponente (b) 5 - 20 Gewichtsteile beträgt, die Menge an Komponente (c) 5-50 Gewichtsteile beträgt und die Menge der Komponente (d) 50 - 150 Gewichtsteile beträgt.

3. Zusammensetzung auf Olefinharzbasis nach Anspruch 1 oder 2, wobei das Säureanhydrid in den Komponenten (b) und (c) Maleinsäureanhydrid ist.

4. Zusammensetzung auf Olefinharzbasis nach Anspruch 1, 2 oder 3, wobei das Metallhydroxid mit einem Aminosilan-, Vinylsilan- oder Epoxysilan-Kupplungsmittel oberflächenbehandeltes Magnesiumhydroxid ist.

5. Verfahren zum Herstellen einer Zusammensetzung auf Olefinharzbasis, umfassend das Durchmischen der folgenden Komponenten:
(a) 39 - 94 Gewichtsteile eines Propylenpolymers mit einer Schmelzflussrate von 0,1 - 5g/10 min, und ausgewählt aus Propylenhomopolymeren und Propylen-Ethylen-Copolymeren mit einem Propylengehalt von mindestens 50 Gewichtsprozent,
(b) 1 - 20 Gewichtsteile eines mit 0,1 - 10 Gewichtsprozent eines Säureanhydrids modifizierten Polypropylens,
(c) 5-60 Gewichtsteile eines mit 0,1 - 10 Gewichtsprozent eines Säureanhydrids modifizierten polymeren Elastomers auf Styrolbasis,
wobei die Gesamtheit der Komponenten (a), (b) und (c) 100 Gewichtsteile beträgt, und
(d) 30 - 200 Gewichtsteile eines Metallhydroxids, wobei keine andere Harzkomponente in der Zusammensetzung eingeschlossen ist.

6. Verfahren nach Anspruch 5, wobei die Menge an Komponente (b) 5 - 20 Gewichtsteile beträgt, die Menge an Komponente (c) 5 - 50 Gewichtsteile beträgt und die Menge an Komponente (d) 50-150 Gewichtsteile beträgt.

7. Verfahren nach Anspruch 5 oder 6, wobei das Säureanhydrid in den Komponenten (b) und (c) Maleinsäureanhydrid ist.

8. Verfahren nach Anspruch 5, 6 oder 7, wobei das Metallhydroxid mit einem Aminosilan-, Vinylsilan- oder Epoxysilan-Kupplungsmittel oberflächenbehandeltes Magnesiumhydroxid ist.

9. Elektrischer Draht mit einem elektrisch leitfähigen Kern und einem Überzug auf dem Kern, wobei der Überzug eine Zusammensetzung auf Olefinharzbasis nach einem der Ansprüche 1 bis 4 ist.

## Revendications

1. Composition de résine à base d'oléfine contenant les composants de résine qui suivent :
(a) 39-94 parties en poids d'un polymère de propylène ayant un taux d'écoulement en phase fondue de 0,1-5g/10min en mesurant en accord avec JIS K6921-2 et qui est sélectionné parmi des homopolymères de propylène et des copolymères de propylène-éthylène ayant une teneur en propylène d'au moins 50 % en poids,
(b) 1-20 parties en poids d'un polypropylène modifié par 0,1-10 % en poids d'un anhydride d'acide,
(c) 5-60 parties en poids d'un élastomère polymérique à base de styrène modifié par 0,1-10 % en poids d'un anhydride d'acide,
où le total des composants (a), (b) et (c) est de 100 parties en poids et aucun autre composant de résine n'est présent dans la composition,
et contenant de plus
(d) 30-200 parties en poids d'un hydroxyde de métal.

2. Composition de résine à base d'oléfine selon la revendication 1, où la quantité du composant (b) est de 5-20 parties en poids, la quantité du composant (c) est de 5-50 parties en poids, et la quantité du composant (d) est de 50-150 parties en poids.

3. Composition de résine à base d'oléfine selon la revendication 1 ou 2, où l'anhydride d'acide dans les composants (b) et (c) est l'anhydride d'acide maléique.

4. Composition de résine à base d'oléfine selon la revendication 1, 2 ou 3, om ledit hydroxyde de métal est de l'hydroxyde de magnésium traité en surface par un aminosilane, un vinylsilane ou un époxysilane comme agent de couplage.

5. Méthode de préparation d'une composition de résine à base d'oléfine comprenant le mélange complet des composants qui suivent :
(a) 39-94 parties en poids d'un polymère de propylène ayant un taux d'écoulement en phase fondue de 0,1 à 5g/10min et sélectionné parmi des homopolymères de propylène et des copolymères de propylène-éthylène ayant une teneur en propylène d'au moins 50 % en poids,
(b) 1-20 parties en poids d'un polypropylène modifié par 0,1-10 % en poids d'un anhydride d'acide,
(c) 5-60 parties en poids d'un élastomère polymérique à base de styrène modifié par 0,1-10 % en poids d'un anhydride d'acide,
où le total des composants (a), (b) et (c) est de 100 parties en poids, et
(d) 30-200 parties en poids d'un hydroxyde de métal, aucun autre composant de résine n'étant incorporé dans la composition.

6. Méthode selon la revendication 5, où la quantité du composant (b) est de 5-20 parties en poids, la quantité du composant (c) est de 5-50 parties en poids, et la quantité du composant (d) est de 50-150 parties en poids.

7. Méthode selon la revendication 5 ou 6, où l'anhydride d'acide dans les composants (b) et (c) est l'anhydride d'acide maléique.

8. Méthode selon la revendication 5, 6 ou 7, où l'hydroxyde de métal est de l'hydroxyde de magnésium traité en surface avec un agent de couplage d'aminosilane, vinylsilane ou époxysilane.

9. Fil électrique ayant une âme électriquement conductrice et un recouvrement sur ladite âme, ledit recouvrement étant une composition de résine à base d'oléfine selon l'une quelconque des revendications 1 à 4.
